# EUROPEAN PATENT SPECIFICATION

(11) **EP 2 828 106 B1**
(45) Date of publication and mention of the grant of the patent: **17.11.2021**
(21) Application number: 13724353.1
(22) Date of filing: 22.03.2013
(51) Int. Cl.: B60H 1/32, H01H 29/00, F28F 25/02, F25B 49/02, F24F 5/00, F24F 6/04, F24F 6/00

(54) **METHOD OF CONTROLLING WATER CONSUMPTION FOR ADIABATIC COOLING SYSTEMS**
VERFAHREN ZUR KONTROLLE DES WASSERVERBRAUCHS FÜR ADIABATISCHE KÜHLANLAGEN
PROCÉDÉ DE RÉGULATION DE CONSOMMATION D'EAU POUR DES SYSTÈMES DE REFROIDISSEMENT ADIABATIQUE

(30) Priority: 23.03.2012 IT MI20120465
(43) Date of publication of application: 28.01.2015
(73) Proprietor: Eurochiller S.r.l., 27030 Castello d'Agogna (PV) (IT)
(72) Inventor: BARBÈ, Cesare, I-27030 Castello d'Agogna (PV) (IT)
(74) Representative: Riccardi, Sergio
(86) International application number: PCT/IB2013/000456
(87) International publication number: WO 2013/140231

(56) References cited:
- EP-A2- 0 773 412
- JP-A- 2 004 181
- US-A- 3 157 716
- US-A- 4 994 211
- US-A- 5 192 464
- US-B1- 6 367 277
- None

## Description

The present invention relates to a method of controlling water consumption in plants operated with disposable water flow, for instance adiabatic cooling systems, humidification or washing plants or any other equipment where water consumption should be reduced.

One of the main technical problems connected to cooling or refrigeration plants exploiting the adiabatic effect, is generally ascribable to the consumption of the thermal carrier fluid, namely water, that can be hardly solved only by implementing sophisticated logics in the regulation system of the feed delivery.

Indeed, in order that any regulation logic implemented by a corresponding method, may have an impact on the plant efficiency, it is necessary that the detection device used in the method, receives as an input the actual quantity of non-evaporated water, namely that water not taking part in the thermal exchange with the fluid to be cooled. The knowledge of this data in real time and with high precision, allows the immediate interruption of the water feed flow.

Examples of prior art solutions are given in US 4 994 221 A, US 3 157 716 A, EP 0 773 412 A2, US 5 192 464 A and US 6 367277 B1.

As explained hereinafter, the present invention does not utilize sophisticated devices detecting the presence of residual fluids in the system elements through which the disposable water runs, but a method where a managing logic is implemented, based on electro-mechanical actuations adapted to receive signals coming from economizer devices, like that disclosed in another application of the same Applicant, filed concurrently herewith.

The control method of the present invention may be regulated and/or implemented for instance by a software and a related electronic system; however these two elements should not be considered as indispensable parts within this method that may be operated even in absence of these elements. In view of this, the description of the invention will not make explicit reference to software and electronic devices.

The method of the present invention is to be primarily used in the adiabatic cooling and humidification systems disclosed in the above mentioned other application of the same Applicant for economizer devices.

The main object of the present invention is to prevent and avoid formation of an excess drain of a residual liquid phase of a flow used or discharged in equipments with disposable fluids.

Another object of the present invention is also to prevent and avoid stagnation of the liquid phase of a fluid, namely avoiding that this is detected only when reaching a determined level.

Still another object of the present invention is to prevent and avoid waste of the liquid phase of a fluid used in evaporation equipments integrated in cooling, heating or humidification apparatus.

A further object of the present invention is to prevent and avoid waste of the liquid phase of a fluid used in evaporation equipments integrated in cooling, heating or humidification apparatus, provided with features complying with the precautions to be taken against development, proliferation and ejection of noxious or lethal bacterial agents (the so-called anti-legionella norms).

Not least, an object of the present invention is to achieve a method of controlling and detecting the liquid phase of a fluid, which is precise and reliable and therefore it is poorly subject to false signals due to deposit of impurities which are inevitably contained in the fluid to be detected.

Finally an object of the present invention is to achieve a method of detecting the liquid phase of a fluid, which is poorly subject to error or false readings of very delicate measurement devices such as the humidity probes.

In this case, for instance in equipments for cooling liquids through radiators constituted by banks of thermal exchange and fans, integrated by adiabatic systems precooling air entering the thermal exchange banks through evaporation of water quantities, the present invention allows to control the evaporation process by using simple dry-bulb thermometers without requiring humidity sensors, or wet-bulb thermometers, whose application would be more evident in spite of the above indicated critical state of their application, since evaporation of water in air is a process tending to saturate air up to a humidity limit, beyond which any further water feed will not generate evaporation useful for the process, but causes a waste of water.

The invention is defined in independent claim 1 and in the dependent claims.

The advantages that can be achieved with the present invention are manifold and are due to the need of obtaining in an economic and efficient way the conditions for a continuous and constant operation of the above mentioned equipments with disposable water flow.

These and other advantages of the present invention will become apparent by reading the following detailed description of a preferred embodiment to be considered with reference to the accompanying sheets of drawings, in which:
Fig. 1 is a diagram of an equipment using disposable water;

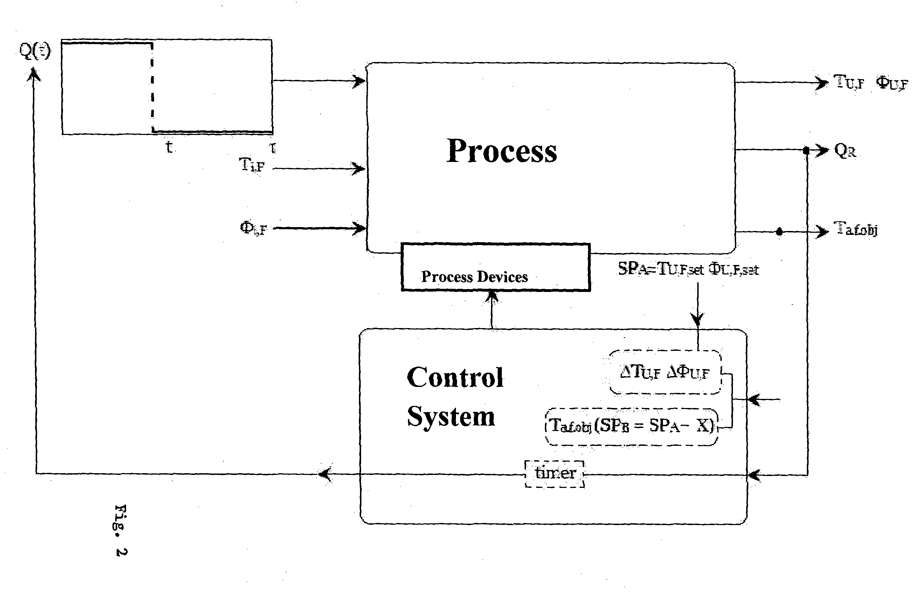

Fig. 2 is a diagram of the control system according to a preferred embodiment of the present invention, interlocked with the equipment of Fig. 1; and

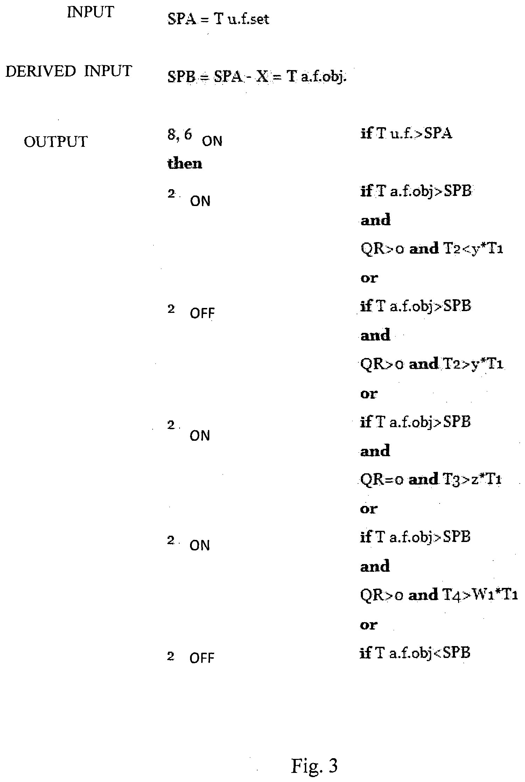

Fig. 3 is a flow chart of the control logic of the system of Fig. 2.

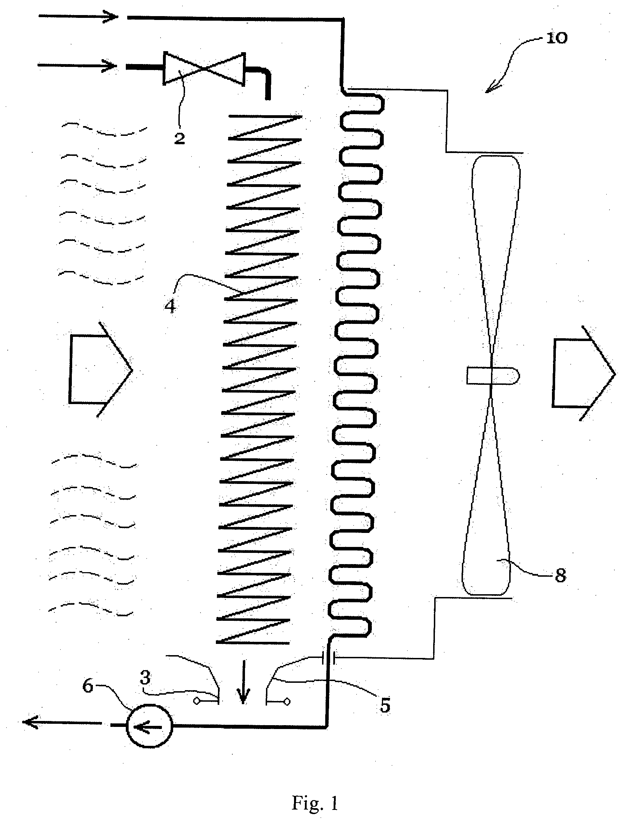

With reference to Fig. 1, disposable water is fed to a system 10 through a delivery regulation device 2 and delivered to an absorption panel 4, in turn hit by an air stream. The conditions for evaporation of the absorbed water obviously depend on temperature, humidity and speed of said stream.

When these conditions are not met for the entire water mass absorbed by the panel, a certain amount of non-evaporated water descends down by the force of gravity and may be collected by a trough 5 and taken away through a disposable drain channel in which an economizer 3 is inserted.

One of the functions of the economizer 3 is to make a transduction of the delivery non-evaporated water passing through the economizer, into a signal sent to the control and drive panel (not shown) of the system 10.

One of the functions of the now described process is to interrupt the water feed by means of the delivery regulation device 2, according to the signal received from the economizer 3.

In this way it is demonstrated that the device 3 acts as an economizer because its actuation, through the implemented control and drive logic, interrupts feed of further water quantities, in the conditions where water cannot evaporate.

The efficiency of this regulation logic is however limited because of the sudden alternation between the condition of uncontrolled water feed through the device 2 of delivery regulation and the subsequent interruption, where the absorbing panel 4 is mostly wet, transferring temporarily to air the due amount of humidity, when it is an adiabatic humidification equipment, or absorbing heat from air because of the water evaporation, when it is an adiabatic cooling equipment, or the panel is partially dry and therefore inefficient, while there is still passage of the last portion of non-evaporated water through the disposable drain containing the economizer 3.

These discontinuities of operation lead to discontinuities of the values of humidity and temperature of air coming out from the absorbing panel 4, and consequently to irregularities of the useful effect required for the equipment, of which the system 10 is an integral part.

In order to prevent occurrence of these operation irregularities, the control and drive logic was developed in a particularly very advantageous way by the process according to the present invention, with the purpose of feeding water to lower panel 4 up to the maximum absorption level, beyond which the non-evaporating excess water falls down to the channel 5 and goes out through the disposable drain.

Within this scope the function of the economizer consists in limiting waste of water, by stopping feed of further quantities of water until the evaporation panel 4 is still wet and therefore cannot absorb and hold further amounts of water.

The main functions of the drive and control logic carried out inside the process of the present invention are the following (the order of the description does not mean any control and operation priority):
1. Determination of the required outlet temperature T_{u,f,set} or humidity Φ_{u,f,set} (set-point of the process being identified with SP_{A}, which does not belong to the air to be cooled and is independent from temperature of the process liquid) of the process fluids, by manual input of these values into the control and drive panel of the system of the present invention.
2. Automatic determination of temperature T_{a,f,obj} of air required downstream the evaporating element (adiabatic set-point identified by SP_{B}, such as SP_{B}=SP_{A}-X, where X is a predetermined temperature value varying in the range from 0°C to 20°C) in order to achieve the target (set-point of the process) indicated in the preceding paragraph 1.
3. Actuation (automatic from electric board) of the additional members required for the process operation (fans, pumps, control and protection devices and so on).
4. Detection of temperature T_{u,f} or humidity Φ_{u,f} of the process fluid and comparison ΔT_{u,f} or ΔΦ_{u,f} with the set-points T_{u,f,set} or Φ_{u,f,set} by process sensors.
5. Actuation of an adiabatic cooling or humidification system with disposable water when the condition T_{a,f,obj}> SP_{B} is verified.
6. Inlet of water Q(t) on panel 4 in intermittent mode on a predetermined time period t₁, as a function of the characteristics of said adiabatic system, or as a function of the sustainable water delivery limit through the water supply net and the water feeding duct inside the equipment, the regulation device included.
7. Detection of possible continuous water passage Q_{R} for a time >0 and up to 10 seconds through the economizer positioned in the disposable drain.
8. Temporary suspension of inlet of disposable water Q(t) for a time t₂ = y · t₁ following detection of water passage Q_{R} through said economizer, where t₁ is a time module >0 and up to 20 seconds as a function of equipment features, while y is a numeric variable comprised between 1 and 10 according to the equipment features.
9. Resumption of feeding disposable water Q(t) after a time t₃ = Z · t₁ from the end of detecting water passage Q_{R} through the economizer, where t₁ is the above mentioned time module > 0 and up to 20 seconds as a function of equipment features, while Z is another numeric variable comprised between 1 and 10 according to the equipment features.
10. Resumption of feeding disposable water at the expiration of a predetermined time t₄ = w₁ · (where w₁ is a time interval comprised between 1 and 1800 seconds as a function of the equipment features) during which conditions occur erroneously corresponding to water passage Q_{R} through the economizer (false signal) due to dirt or condensed humidity.
11. Actuation of feeding disposable water Q(t) even after a period of inactivity, at the expiration of a predetermined time t₅ = w₂ (where w₂ is a time interval comprised between 1 and 1800 seconds as a function of the equipment features) during which conditions occur erroneously corresponding to water passage Q_{R} through the economizer (false signal) due to dirt or condensed humidity.
12. Suspension of feeding disposable water Q(t) to the panel 4 when the targets (adiabatic set-point) according to paragraph 2, with T_{a,f,obj} = SP_{B} are achieved.
13. Suspension or variation of the actuation rate of some additional members when the targets (process set-point) according to paragraph 1 are achieved, through actuation from the electric board.

More particularly it is to be noted that in the adiabatic system (70), the quantity of feeding water (76) to be evaporated is not calculated/controlled on the basis of reaching a physical quantity (temperature) which is specific, determined, selected, desired or set in a discrete (precise) way for the process liquid (F), as it happens in other prior art processes. On the contrary the quantity of feeding water (76) to be evaporated, is controlled by maintaining a determined difference of physical quantity, namely a temperature difference (X) relative to an initial value (SP_{A}) not belonging to the air to be cooled, independently from the temperature of the process liquid (F) until the whole equipment reaches the desired temperature (SP_{A}) of the process liquid.

Advantageously in the method according to the present invention the two cooling processes (liquid and air) are independent with two separate set-points:
A) Liquid Set-Point: SP_{A}
B) Derived air set-point: SP_{B} = SP_{A} - X

Said set-points are independent in such a way, that the intensity of adiabatic cooling is not proportional to intensity of cooling the process liquid. In this manner the present invention avoids intermittent or irregular operative conditions, since the operation of the adiabatic system is not conditioned or disturbed by the thermal load variabilities which are intrinsic of the process fluid to be cooled up to the outlet temperature (Tᵤ).

In addition to the indispensable functions (equipment switching on/off), the inventive drive and control method may be integrated by actuation/suspensions steps when the equipment is split into two or more homogeneous operative modules.

The above described functions may be applied and used partially with the drive and control method devised for any application (not necessarily connected to the cooling or humidification functions) where there is a flow of disposable water and arrangements are needed to reduce waste of water.

For applications in the anti-bacterial field, the present drive and control method, adapted to be operated together with the economizer being the object of the concurrent patent application of the same Applicant, is a protection against the presence of non-evaporated water for regulation systems in evaporation plants integrated into cooling, heating or humidification equipments provided with features meeting the precautions against the development, proliferation and ejection of noxious or lethal bacterial agents (the so-called anti-legionella norms).

Since an evaporation plant may contain a system to apply water to be evaporated such as a duct, a nozzle, a container provided with holes or nozzles, a bored pipe, or one or more spraying or atomising nozzles, with or without air or water pressurization systems, and an element on which the evaporating water is temporarily deposited, it is well known that said temporary water deposit tends to fall downwards by the force of gravity.

In addition to the need remedied by the inventive method, to provide for restoring the level of temporary water deposit during evaporation, the consequences of an uncontrolled mass transfer consist of the following drawbacks: greater water consumption due to missed evaporation of water entering any disposable drain device; need to ensure a water availability equal to or greater than the water excess consumption; risk of mechanical dragging of excess water into forced air circulation plants, with possibility of water storage formation, where noxious or lethal bacterial substances may develop and proliferate. From the foregoing detailed description it is clear, more particularly in the field of evaporation plants, that the method according to the present invention allows a detection and therefore an immediate retroaction of the quantity of non-evaporated water, a reduction of the operating costs, downsizing of the water stock to be used for the evaporation plant and finally a reduction of the risk of proliferation of noxious or lethal bacterial substances that may arise and develop because of possible excess water storage, dragged onto the forced air circulation plants.

## Claims

1. A method of controlling water delivery in an air treatment plant with thermal exchange with process fluids, said treatment plant comprising an air inlet duct from outside said plant, a water absorbing element hit by said air, a water feeding duct for said absorbing element and an economizer device, said method comprising the following steps:
- detection by said economizer device (3) of a presence of non-evaporated feeding water (Q_{R}) from absorbing element (4), (Q_{R}) descending down by force of gravity to said economizer device (3);
- transduction of the presence of non-evaporated feeding water (Q_{R}) by said economizer device (3) into a signal emitted by the economizer device (3);
- delivery of feeding water Q(t) to said water absorbing element (4) in intermittent mode on a predetermined time period t₁ as a function of the characteristics of said adiabatic system, or as a function of the sustainable water delivery limit through the water supply net and the water feeding duct inside the equipment, the regulation device included;
- temporary suspension of the delivery of feeding water Q(t) for a time t₂ = y*t₁ following detection of water passage Q_{R} through said economizer, where t₁ is a module > 0 and up to 20 seconds as a function of equipment features, while y is a numeric variable comprised between 1 and 10 according to the equipment features;
- resumption of feeding disposable water Q(t) after a time t₃ = Z*t₁ from the end of detecting water passage Q_{R} through the economizer, where t₁ is the above mentioned time module > 0 and up to 20 seconds as a function of equipment features, while Z is another numeric variable comprised between 1 and 10 according to equipment features;
- resumption of feeding disposable water at the expiration of a predetermined time t₄=w₁ , where w₁ is a time interval comprised between 1 and 1800 seconds as a function of the equipment features, which is calculated starting from the moment in which said economizer device detects the passage of condensate or other substance not coming from said absorbing element.

2. The method of claim 1, comprising two cooling processes for water and air being independent and being based on two separate set-points (SP_{A}) for water and (SP_{B}) as derived air set point.

3. The method claim 1, wherein said delivery of feeding water (Q(t)) to be evaporated, is controlled by maintaining a determined temperature difference (X) relative to liquid Set-Point (SP_{A}) not belonging to the air to be cooled, independently from the temperature of the liquid process (F) until the whole equipment reaches the desired temperature set-point of the process liquid (SP_{A}).

4. The method of claim 2, wherein the value (SP_{B}) is the derived set-point of the cooling process of treated air, and is derived on the basis of said value (SP_{A}) of temperature or humidity of said process fluid wherein SP_{B} = SP_{A} - X.

5. The method of claim 2, wherein the match of liquid Set-Point (SP_{A}) with derived air set-point (SP_{B}) temperature causes interruption of delivery of the feeding water.

6. The method of claim 2, wherein the match of temperature or relative humidity of the process fluid with the desired value of liquid Set-Point (SP_{A}) of temperature or humidity of said process fluid, causes interruption of delivery of the feeding water.

7. The method of claim 1, wherein the method regulates the functions of activation and deactivation of the air treatment plant.

8. The method of claim 1, wherein the method regulates the functions of activation and deactivation of one or more auxiliary devices of the air treatment plant.

## Patentansprüche

1. Verfahren zur Kontrolle des Wasserverbrauchs in einer Luftaufbereitungsanlage durch Warmeaustausch mit Prozessflüssigkeiten, worin diese Aufbereitungsanlage eine Einlassleitung der Aussenluft, ein von dieser Luft berührtes Wasserabsorberelement, eine Wassereinlassleitung für dieses Absorberelement, und einen Economiser enthält, worin dieses Verfahren die folgenden Stufen aufweist:
- Feststellung vom Economiser (3) des Vorhandenseins von durch das Absorberelement (4) von nicht-evaporiertem Speisewasser (Q_{R}), das wegen der Schwerkraft nach dem Economiser (3) abwärts fliesst;
- Umformung des festgestellten Vorhandenseins vom nicht-evaporiertem Speisewasser (Q_{R}) in ein vom Economiser (3) ausgesandtes Signal;
- Versorgung von Speisewasser Q(t) an das Wasserabsorberelement (4) intermittierend für einen vorgegebenen Zeitraum t₁ als Funktion der Eigenschaften des adiabatischen Systems, oder als Funktion der haltbaren Grenze der Wasserversorgung durch das Wassernetz und die Wassereinlassleitung in der Anlage, die Steuerungsvorrichtung eingeschlossen;
- Zeitweilige Aussetzung der Versorgung von Speisewasser Q(t) über die Zeit t₂ = y*t₁ nach der Feststellung des Wasserdurchflusses Q_{R} durch den Economiser (3), worin t₁ ein Modul > 0 und bis zu 20 Sekunden ist, als Funktion der Merkmale der Anlage, während y eine numerische Variable zwischen 1 und 10 nach den Merkmalen der Anlage ist;
- Wiederaufnahme der Versorgung des Wegwerfwassers Q(t) nach einer Zeit t₃ = Z*t₁ nach Ende der Feststellung des Wasserdurchflusses Q_{R} durch den Economiser, worin t₁ der oben bezeichnete Zeitmodul > 0 und bis zu 20 Sekunden ist, als Funktion der Merkmale der Anlage ist;
- Wiederaufnahme der Versorgung des Wegwerfwassers am Ende einer vorgegebenen Zeit t₄ = w₁, worin w₁ ein Zeitabstand zwischen 1 und 18oo Sekunden ist, als Funktion der Merkmale der Anlage, der dadurch berechnet wird, dass die Zeitzählung beginnt, als der Economiser den Durchfluss von Kondensat bzw. anderen nicht aus dem Absorberelement stammenden Stoffen feststellt.

2. Verfahren nach Anspruch 1, enthaltend zwei unabhängige Kühlumgsprozesse für Wasser bzw. Luft, die auf zwei gesonderten Sollwerten (SP_{A}) für Wasser bzw. (SP_{B}) für abgeleitete Luft begründet sind.

3. Verfahren nach Anspruch 1, worin die Versorgung des evaporierenden Speisewassers (Qt) dadurch gesteuert wird, dass eine bestimmte Temperaturdifferenz (X) für den Sollwert (SP_{A}) der Flüssigkeit bewahrt wird, unabhängig von der Temperatur der Prozessflüssigkeit F, bis die ganze Anlage den gewünschten Sollwert (SP_{A}) der Prozessflüssigkeit erreicht.

4. Verfahren nach Anspruch 2, worin der Wert (SP_{B}) der Sollwert des Kühlprozesses der behandelten Luft ist, und dieser Wert aus dem Wert (SP_{A}) der Temperatur bzw. Feuchtigkeit der Prozessflüssigkeit abgeleitet wird, wo SP_{B}= SP_{A} ― X.

5. Verfahren nach Anspruch 2, worin die Übereinstimmung vom Flüssigkeitssollwert (SP_{A}) mit der abgeleiteten Temperatur des Luftsollwerts (SP_{B}) die Aussetzung der Versorgung des Speisewassers bewirkt.

6. Verfahren nach Anspruch 2, worin die Übereinstimmung, der Temperatur bzw. Feuchtigkeit der Prozessflüssigkeit mit dem gewünschten Flüssigkeitsollwert (SP_{A}) der Temperatur bzw. Feuchtigkeit der Flüssigkeit, die Aussetzung der Versorgung des Speisewassers bewirkt.

7. Verfahren nach Anspruch 1, worin das Verfahren die Funktionen der Inbetriebsetzung bzw. des Abschaltens der Luftaufbereitungsanlage regelt.

8. Verfahren nach Anspruch 1, worin das Verfahren die Funktionen der Inbetriebsetzung bzw. des Abschaltens einer bzw. mehreren Hilfseinrichtungen der Luftaufbereitungsanlage regelt.

## Revendications

1. Procédé de régulation de consommation d'eau pour une installation de traitement de l'air par échange thermique avec fluides du processus, ladite installation de traitement comprenant une conduite d'entrée d'air de l'extérieur de ladite installation, un élément absorbant de l'eau touché par ledit air, une conduite d'alimentation de l'eau pour ledit élément absorbant, et un dispositif économiseur, ledit procédé comprenant les phases suivantes :
- détection par ledit dispositif économiseur (3) d'une présence d'eau d'alimentation (Q_{R}) pas évaporée de l'élément absorbant (4), en descendant par gravité au dit dispositif économiseur (3) ;
- transduction de la présence d'eau d'alimentation (Q_{R}) pas évaporée par ledit dispositif économiseur (3) en un signal émis par le dispositif économiseur (3) ;
- envoi d'eau d'alimentation Q(t) au dit élément absorbant (4) en mode intermittent dans une période temporelle t₁ prédéterminée comme fonction des caractéristiques du système adiabatique, ou comme fonction de la limite durable d'envoi de l'eau par le réseau d'alimentation de l'eau et par la conduite d'alimentation de l'eau dans l'équipement, le dispositif de régulation y inclus ;
- suspension temporaire de l'envoi d'eau d'alimentation Q(t) pour un temps t₂ = y*t₁, après la détection du passage d'eau Q_{R} par ledit économiseur, où t₁ est un module > 0 jusqu'à 20 secondes comme fonction des caractéristiques de l'équipement ;
- reprise de l'alimentation d'eau à éliminer Q(t) après un temps t₃ = Z*t₁ de la fin de la détection du passage d'eau Q_{R} par ledit économiseur, où t₁ est le module du temps susmentionné > 0 et jusqu'à 20 secondes comme fonction des caractéristiques de l'équipement, tandis que Z est une autre variable numérique comprise entre 1 et 10 selon les caractéristiques de l'équipement ; et
- reprise de l'alimentation d'eau à éliminer à la fin d'un temps prédéterminé t₄ = wi, où w₁ est un intervalle de temps compris entre 1 et 1800 secondes comme fonction des caractéristiques de l'équipement, calculé du moment dans lequel le dit dispositif économiseur détecte le passage de la buée ou autre substance pas provenant du dit élément absorbant.

2. Procédé de la revendication 1, comprenant deux systèmes de refroidissement pour eau et air, indépendants et fondés sur deux points de référence séparés, (SP_{A}) pour l'eau et (SP_{B}) pour l'air dérivé.

3. Procédé de la revendication 1, dont l'envoi de l'eau d'alimentation à éliminer Q(t) est contrôlée en gardant une différence de température déterminée (X) pour le point de référence (SP_{A}) du liquide, pas relié à l'air à refroidir, indépendamment de la température du liquide du processus (F), jusqu'au moment où l'équipement entier arrive au point de référence de la température (SP_{A}) désiré pour le liquide du processus.

4. Procédé de la revendication 2, dont la valeur (SP_{B}) est le point de référence dérivé du processus de refroidissement de l'air traité, sur la base de la valeur désirée (SP_{A}) de température ou humidité du liquide du processus, où SP_{B} = SP_{A} - X.

5. Procédé de la revendication 2, dont la correspondance du point de référence (SP_{A}) du liquide avec la température dérivée du point de référence (SP_{B}) de l'air, cause l'interruption de la fourniture de l'eau d'alimentation.

6. Procédé de la revendication 2, dont la correspondance de la température ou de la humidité relative du fluide du processus avec la valeur désirée du point de référence (SP_{A}) du liquide, de la température ou humidité du fluide, cause l'interruption de la fourniture de l'eau d'alimentation.

7. Procédé de la revendication 1, dont le procédé règle les fonctions d'activation et désactivation de l'installation de traitement de l'air.

8. Procédé de la revendication 1, dont le procédé règle les fonctions d'activation et désactivation d'un ou plusieurs dispositifs auxiliaires de l'installation de traitement de l'air.
